# EUROPÄISCHE PATENTANMELDUNG

(11) **EP 1 669 644 A2**
(43) Veröffentlichungstag der Anmeldung: **14.06.2006**
(21) Anmeldenummer: 05024726.1
(22) Anmeldetag: 11.11.2005
(51) Int. Cl.: F16H 61/32, F16H 63/20

(54) **Schaltungsmodul für eine Kraftfahrzeug-Getriebeeinrichtung**

(30) Priorität: 09.12.2004 DE 102004059301
(71) Anmelder: LuK Lamellen und Kupplungsbau Beteiligungs KG, 77815 Bühl (DE)
(72) Erfinder: Ehrlich, Matthias, 77815 Bühl (DE); Esly, Norbert, 77815 Bühl (DE)

(57) **Zusammenfassung**

Eine Kraftfahrzeug-Getriebeeinrichtung mit einer ersten Getriebeeingangswelle, einer ersten Getriebeausgangswelle, einer zweiten Getriebeausgangswelle, mehreren Radsätzen zur Bildung von Gängen und mit einem Getriebeaktor, wobei die erste Getriebeeingangswelle und die erste Getriebeausgangswelle und die zweite Getriebeausgangswelle sich im Wesentlichen parallel zueinander und quer zu ihrer jeweiligen Längsrichtung jeweils beabstandet zueinander erstrecken und wobei dieser Getriebeaktor einen ersten Elektromotor aufweist, wobei dieser erste Elektromotor und / oder eine zentrale Schaltwelle des Getriebeaktors auf der Seite wenigstens einer ersten Ebene, in der die zentrale Längsachse der ersten Getriebeeingangswelle gelegen ist, angeordnet ist, auf der auch und die zentrale Längsachse der ersten Getriebeausgangswelle und die zentrale Längsachse der zweiten Getriebeausgangswelle angeordnet ist.

## Beschreibung

Die Erfindung betrifft eine Kraftfahrzeug-Getriebeeinrichtung, ein Schaltungsmodul für eine Kraftfahrzeug-Getriebeeinrichtung, einen Kraftfahrzeug-Antriebsstrang mit einer Kraftfahrzeug-Getriebeeinrichtung, sowie ein Kraftfahrzeug mit einer Kraftfahrzeug-Getriebeeinrichtung.

Kraftfahrzeug-Getriebeeinrichtungen sind in diversen Ausgestaltungen bekannt. Ausgehend von konventionellen Handschaltgetrieben wurden beispielsweise Automatisierte Schaltgetriebe (ASG) geschaffen, bei denen Schaltvorgänge elektronisch gesteuert (ausgelöst) werden. Ferner sind Getriebe bekannt geworden, die parallel geschaltete Antriebsstrangzweige aufweisen, wie beispielsweise Doppelkupplungsgetriebe (DKG) bzw. Parallelschaltgetriebe (PSG).

Bekannt geworden sind ferner diverse Betätigungseinrichtungen für Getriebe. Eine beispielhafte, bekannte Betätigungseinrichtung ist in der DE 103 16 434 A1 erläutert. Die dort erläuterte Betätigungseinrichtung ist elektromechanisch ausgebildet und weist einen Schaltmotor für die Erzeugung von Schaltbewegungen und einen Wählmotor für die Erzeugung von Wählbewegungen auf.

Bei Kraftfahrzeug-Getriebeeinrichtungen unterscheidet man häufig zwischen dem inneren Getriebe mit seiner inneren Getriebeschaltung und einer äußeren Getriebeschaltung, die - insbesondere bei fremdkraftunterstützten Gestaltungen bzw. bei Gestaltungen mit Elektromotor - auch als Aktor bezeichnet wird.

Das innere Getriebe mit seiner inneren Getriebeschaltung weist dabei i.d.R. die die unterschiedlichen Übersetzungen bildenden Bauteile, wie Zahnräder, sowie mit diesen Zahnräder gekoppelte bzw. koppelbare Bauteile, wie Wellen, auf. Dabei sind i.d.R. Gangkupplungen oder funktionsgleiche oder funktionsähnliche Einrichtungen vorgesehen, mittels welchen Kopplungen zum Einlegen von Gängen erzeugt und zum Auslegen von Gängen gelöst werden können. Dies kann beispielsweise so sein, dass mittels einer solchen Gangkupplung eine drehfeste Verbindung zwischen einem Zahnrad eines einen Gang bildenden Zahnradsatzes und einer dieses Zahnrad tragenden Welle erzeugt bzw. gelöst werden kann. Von diesen Gangkupplungen erstreckt sich bis zur Schnittstelle zur äußeren Getriebeschaltung die innere Getriebeschaltung. Diese weist meist mehrere Mechanismen auf, die sich jeweils von einer Gangkupplung in Richtung der äußeren Getriebeschaltung erstrecken. Es sind diverse Gestaltungen bekannt, bei denen zur Kraftübertragung von der äußeren Getriebeschaltung auf die innere Getriebeschaltung diese angesprochenen Mechanismen jeweils ein Schaltmaul oder dergleichen aufweisen, das beispielsweise in einer Schaltschiene oder Schaltgabel oder dergleichen eingebracht sind. Die äußere Getriebeschaltung weist dabei häufig ein oder mehrere Teile, wie Schaltfinger, auf die in diese Schaltmäuler betätigend eingreifen können. Dies ist häufig so realisiert, dass ein solcher Schaltfinger oder dergleichen zum Wählen in eine Position bewegt werden kann, aus der er dann in einer weiteren Bewegung, die hinsichtlich ihrer Richtung i.d.R. von der Wählbewegungsrichtung abweicht, zum Schalten bewegt werden kann.

Ferner ist bekannt, dass bei Gangwechselvorgängen in klassisch gestalteten gestuften Kraftfahrzeug-Getriebeeinrichtungen - ausgehend von dem alten Gang - die folgenden drei Schritte in zeitlicher Abfolge ablaufen: "Auslegen des alten Ganges"-"Wählen"- "Einlegen des Zielganges". Darüber hinaus sind Kraftfahrzeuggetriebegestaltungen bekannt geworden, bei denen das Wählen bzw. Wählbewegungen vor dem Auslegen des alten Ganges stattfinden kann. Bei solchen Gestaltungen ist beispielsweise vorgesehen, das ein Hauptbetätigungselement bzw. Schaltfinger im Wesentlichen nur für das Einlegen von Gängen zuständig ist und zusätzliche Geometrien die Funktion des Auslegens von Gängen übernehmen. Dabei werden insbesondere so genannte Nebenbetätigungselemente für die Auslegefunktion verwendet. Bekannt ist weiter, dass sich die zusätzlichen Geometrien einerseits beispielsweise an einer zentralen Schaltwelle befinden und andererseits an Schaltmäulern, die an den genannten Mechanismen bzw. Endausgangsmechanismen bzw. Schaltgabeln oder Schaltschienen oder dergleichen vorgesehen sind.

Die Auslegegeometrien wirken in aller Regel in Gassen, in denen der Schaltfinger nicht aktiv ist. Dabei kann vorgesehen sein, dass eine feste Zuordnung zwischen Schaltfinger und Auslegegeometrie dabei gleichzeitig eine aktive Gangsperre darstellt. Konstruktive Umsetzungen dieses Ansatzes werden daher auch als "Active Interlock" bezeichnet.

Bei einem solchen "Active Interlock" ist in aller Regel vorgesehen, dass das Hauptbetätigungselement bzw. der Schaltfinger auch bei eingelegtem Gang in eine Mittel- bzw. Neutralposition zurück bewegt werden kann, ohne den Gang auszulegen. Die Wählbewegung wird dabei möglich, bevor der Gang ausgelegt ist.

Beispiele für derartige Gestaltungen sind beispielsweise in der DE 102 06 561 A1 der Anmelderin erläutert.

Bekannt sind ferner sog. 3-Wellen-Getriebe, so wie der Einsatz derartiger Getriebe in Kraftfahrzeugen. Bei diesen ist eine der Brennkraftmaschine zugewandte Getriebeeingangswelle vorgesehen, sowie zwei Getriebeausgangswellen. Zwischen dieser Getriebeeingangswelle und jeder der Getriebeeingangswelle sind dabei Radsätze zur Bildung von Gängen vorgesehen. Von diesen Getriebeeingangswellen bzw. der jeweiligen, bzgl. welcher ein Gang eingelegt ist, wird das Drehmoment in Richtung des Differentials übertragen. Weiter ist bekannt, dass solche 3-Wellen-Getriebe Bestandteil von Doppelkupplungsgetrieben (DKG) bzw. Parallelschaltgetrieben (PSG) sein können. Dabei ist vorgesehen, dass jedes der beiden parallelgeschalteten Teilgetriebe nach Art eines 3-Wellen-Getriebes ausgebildet ist. Diese kann beispielsweise so sein, dass diesen beiden Teilgetrieben separate Getriebeeingangswellen zugeordnet sind, und sich die beiden Teilgetriebe die beiden Getriebeausgangswellen teilen.

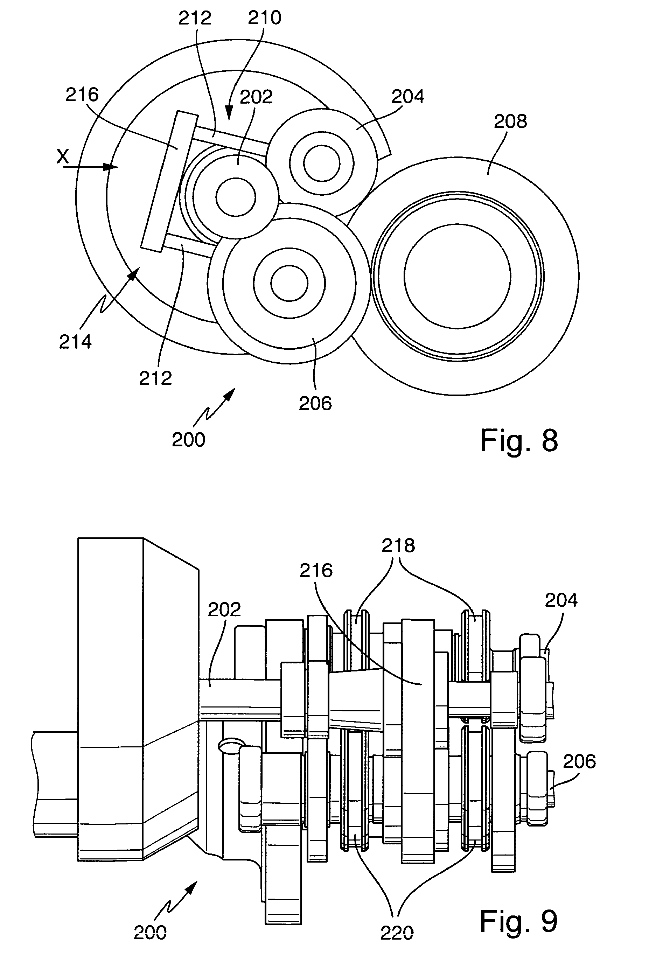

Die Fig. 8 und 9 zeigen eine der Anmelderin zumindest intern bekannte Struktur eines 3-Wellen-Getriebes für eine Front-Quer Anwendung in einem Kraftfahrzeug.

Dieses 3-Wellen-Getriebe bzw. diese Getriebeeinrichtung 200 weist eine Eingangswelle 202 auf, sowie eine Hauptwelle bzw. erste Ausgangswelle 204 und eine Hauptwelle bzw. zweite Ausgangswelle 206. Ferner ist in Fig. 8 das Differentialrad 208 eines Kraftfahrzeugs dargestellt. Überdies ist schematisch angedeutet, dass das Kraftfahrzeug ferner eine Kupplung bzw. Anfahrkupplung 210 aufweist. Es ist vorgesehen, dass einerseits zwischen der Getriebeeingangswelle 202 und der ersten Getriebeausgangswelle 204 und andererseits zwischen der Getriebeeingangswelle 202 und der zweiten Getriebeausgangswelle 206 jeweils Zahnradsätze zur Bildung von Gängen vorgesehen sind. Dabei ist insbesondere vorgesehen, dass die Zahnräder dieser Zahnradsätze, die auf der Getriebeeingangswelle 202 angeordnet sind, dort drehfest gelagert sind und Zahnräder dieser jeweiligen Zahnradsätze, die auf der ersten Getriebeausgangswelle 204 bzw. der zweiten Getriebeausgangswelle 206 angeordnet sind, jeweils als Losräder bzw. als gegenüber der jeweiligen Welle 204, 206 drehbare Räder ausgebildet sind. Ferner sind dort Gangkupplungen vorgesehen, mittels derer zum Einlegen eines Ganges ein jeweils betreffendes Zahnrad auf der ersten Getriebeausgangswelle 204 oder der zweiten Getriebeausgangswelle 206 mit der entsprechenden Welle 204, 206 gekoppelt werden kann. Zum Betätigen dieser Gangkupplungen ist ferner eine schematisch angedeutete innere Schaltung 212 vorgesehen. Diese innere Schaltung 212 kann mittels eines Getriebeaktors 214 betätigt werden.

Dieser Getriebeaktor 214 weist eine Drehwelle bzw. eine zentrale Schaltwelle auf, die bei Getriebeaktoranwendungen an derartigen 3-Wellen-Getrieben, im wesentlichen so positioniert ist, wie es schematisch in Fig. 8 durch das Bezugszeichen 216 angedeutet ist. Es ist insbesondere vorgesehen, dass diese zentrale Schaltwelle 216 und der Elektromotor des Getriebeaktors 214 - der in der Fig. 8 nicht dargestellt ist - auf der den Getriebeausgangswellen 204, 206 abgewandten Seite der Getriebeeingangswelle 202 angeordnet ist.

Die zentrale Schaltwelle 216 bzw. an dieser angeordnete Elemente, wie Haupt- und/oder Nebenbetätigungselemente bzw. Schaltfinger, stehen mit Bauteilen der inneren Schaltung 212 in Eingriff bzw. können mit diesem in Eingriff gebracht werden.

Fig. 9 zeigt eine Ansicht aus Blickrichtung "x" aus Fig. 8 auf das 3-Wellen-Getriebe.

Dort ist zu erkennen, dass die gewählte Position der zentralen Schaltwelle bzw. Drehwelle 216 den Zugang zu den Schaltschienenpaaren 218, 220 an den jeweiligen Hauptwellen bzw. Getriebeausgangswellen 204, 206 ermöglicht.

Der Erfindung liegt die Aufgabe zugrunde, eine Kraftfahrzeug-Getriebeeinrichtung zu schaffen, die sich auf einfache Weise montieren lässt und platzsparend ausgebildet ist und ggf. eine gute Eignung für Front-Quer-Anwendungen in Kraftfahrzeugen aufweist.

Erfindungsgemäß wird insbesondere eine Kraftfahrzeug-Getriebeeinrichtung gemäß Anspruch 1, ein Schaltungsmodul für eine Kraftfahrzeug-Getriebeeinrichtung gemäß Anspruch 16, ein Kraftfahrzeugantriebsstrang gemäß Anspruch 17 oder gemäß Anspruch 19, sowie ein Kraftfahrzeug gemäß Anspruch 20 vorgeschlagen. Bevorzugte Gestaltungen sind Gegenstand der Unteransprüche.

Erfindungsgemäß wird insbesondere eine Kraftfahrzeug-Getriebeeinrichtung vorgeschlagen, die eine erste Getriebeeingangswelle, eine erste Getriebeausgangswelle sowie eine zweite Getriebeausgangswelle aufweist. Die Kraftfahrzeug-Getriebeeinrichtung weist ferner mehrere Radsätze zur Bildung von Gängen auf. Die Gestaltung ist also als 3-Wellen-Getriebe ausgebildet.

Es ist insbesondere vorgesehen, dass zumindest einer dieser Radsätze bzw. einer oder mehrere dieser Radsätze der Getriebeeinrichtung zwischen der ersten Getriebeeingangswelle und der ersten Getriebeausgangswelle angeordnet ist, und zumindest einer dieser Radsätze der Getriebeeinrichtung bzw. einer oder mehrere dieser Radsätze der Getriebeeinrichtung zwischen der ersten Getriebeeingangswelle und der zweiten Getriebeausgangswelle angeordnet ist. Der oder die zwischen der ersten Getriebeeingangswelle und der ersten Getriebeausgangswelle angeordneten Radsätze sind dabei insbesondere von dem oder den zwischen der ersten Getriebeeingangswelle und der zweiten Getriebeausgangswelle angeordneten Radsätzen verschieden.

Die vorgenannte Anordnung eines bzw. mehrerer Radsätze zwischen der ersten Getriebeeingangswelle und der ersten Getriebeausgangswelle ist insbesondere so, dass jeweils ein Rad dieses bzw. dieser betreffenden Radsätze auf der ersten Getriebeeingangswelle angeordnet ist bzw. von dieser getragen wird, und ein davon jeweils verschiedenes Rad dieses jeweiligen Radsatzes auf der ersten Getriebeausgangswelle angeordnet ist bzw. von dieser getragen wird.

Die vorgenannte Anordnung eines bzw. mehrerer Radsätze zwischen der ersten Getriebeeingangswelle und der zweiten Getriebeausgangswelle ist insbesondere so, dass jeweils ein Rad dieses bzw. dieser betreffenden Radsätze auf der ersten Getriebeeingangswelle angeordnet ist bzw. von dieser getragen wird, und ein davon jeweils verschiedenes Rad dieses jeweiligen Radsatzes auf der zweiten Getriebeausgangswelle angeordnet ist bzw. von dieser getragen wird. Sowohl bezüglich des bzw. der erwähnten Radsätze, die zwischen der ersten Getriebeeingangswelle und der ersten Getriebeausgangswelle angeordnet sind, als auch bezüglich des bzw. der erwähnten Radsätze, die zwischen der ersten Getriebeeingangswelle und der zweiten Getriebeausgangswelle angeordnet sind, ist insbesondere vorgesehen, dass das jeweilige, auf der ersten Getriebeeingangswelle angeordnete bzw. von dieser getragene Rad drehfest mit der ersten Getriebeeingangswelle gekoppelt ist; das dem jeweils gleichen Radsatz zugeordnete Rad, das auf der ersten Getriebeausgangswelle bzw. der zweiten Getriebeausgangswelle angeordnet bzw. von der jeweils betreffenden getragen wird, ist insbesondere jeweils als Losrad ausgebildet bzw. drehbeweglich gegenüber dieser jeweils betreffenden Getriebeausgangswelle angeordnet. Dabei ist insbesondere vorgesehen, dass Gangkupplungen bzw. funktionsgleiche oder funktionsähnliche Einrichtungen vorgesehen sind, mittels welchen die jeweiligen Losräder bzw. die gegenüber der jeweils betreffenden Ausgangswelle drehbeweglich angeordneten Räder mit dieser jeweils betreffenden Ausgangswelle zum Einlegen eines jeweiligen Ganges drehfest koppelbar sind.

Es ist vorgesehen, dass die erste Getriebeeingangswelle, die erste Getriebeausgangswelle und die zweite Getriebeausgangswelle jeweils parallel zueinander angeordnet sind. Dabei ist vorgesehen, dass diese drei Wellen - insbesondere im jeweiligen Vergleich jeweils zweier dieser drei Wellen - quer zu ihrer Längsrichtung beabstandet zueinander angeordnet sind. Dies ist insbesondere so, dass die drei Längsachsen dieser drei Wellen in einer zu ihren Längsachsen senkrecht betrachteten Ebene ein Dreieck definieren bzw. die Ecken bzw. Eckpunkte eines fiktiven Dreiecks bilden.

Ferner weist die Kraftfahrzeugsgetriebeeinrichtung einen Getriebeaktor auf, der insbesondere ein Getriebeaktor zum Ein- und Auslegen von Gängen der Kraftfahrzeug-Getriebeeinrichtung ist. Dieser Getriebeaktor weist einen ersten Elektromotor auf. Es kann auch vorgesehen sein, dass der Getriebeaktor zusätzlich einen zweiten Elektromotor aufweist. Dabei kann insbesondere vorgesehen sein, dass einer dieser Elektromotoren ein Wählmotor ist und einer dieser Elektromotoren ein Schaltmotor ist. Insbesondere ist vorgesehen, dass die jeweilige Antriebswelle der ersten und / oder zweiten Elektromotors wahlweise in entgegen gesetzten Drehrichtungen antreibbar ist. Es kann auch vorgesehen sein, dass der Getriebeaktor genau einen Elektromotor aufweist, welcher Bewegungen für das Wählen und für das Schalten erzeugen kann. Dies kann beispielsweise so sein, dass der Elektromotor seine Antriebswelle in unterschiedliche Drehrichtungen bewegen kann, wobei eine Drehrichtung für das Schalten und eine Drehrichtung für das Wählen ist, wobei eine entsprechende Übertragungsmechanik die Motorbewegung in eine entsprechende Wähl- bzw. Schaltbewegung umsetzt.

In bevorzugter Gestaltung weist der Getriebeaktor ferner eine zentrale Schaltwelle auf. Eine solche zentrale Schaltwelle kann beispielsweise mit einem Hauptbetätigungselement bzw. Schaltfinger versehen sein. Es kann auch vorgesehen sein, dass ein oder mehrere Nebenbetätigungselemente an einer solchen zentralen Schaltwelle vorgesehen sind, die gegebenenfalls mit dem wenigstens einen Hauptbetätigungselement einstückig verbunden sind.

Der erste Elektromotor- bzw. - sofern vorhanden - eine zentrale Schaltwelle des Getriebeaktors und / oder - sofern vorhanden - der zweite Elektromotor und / oder der Getriebeaktor und die zentrale Längsachse der ersten Getriebeausgangswelle und die zentrale Längsachse der zweiten Getriebeausgangswelle sind bei der erfindungsgemäßen Kraftfahrzeug-Getriebeeinrichtung auf derselben Seite wenigstens einer ersten Ebene angeordnet, in welcher ersten Ebene die zentrale Längsachse der ersten Getriebeeingangswelle gelegen ist. Dies bedeutet nicht, dass die angesprochenen Bauteile bzw. Achsen in Bezug auf jede Ebene, in der die zentrale Längsachse der ersten Getriebeeingangswelle gelegen ist, auf der gleichen Seite dieser Ebenen angeordnet sind, sondern vielmehr, dass wenigstens eine solche erste Ebene existiert, in Bezug auf welche die angesprochenen Teile bzw. Achsen auf der gleichen Seite dieser ersten Ebene angeordnet sind.

In einer bevorzugten Gestaltung ist vorgesehen, dass diese erste Ebene parallel - und insbesondere beabstandet - zu einer zweiten Ebenen gelegen ist, die durch die zentrale Längsachse der ersten Getriebeausgangswelle und die zentrale Längsachse der zweiten Getriebeausgangswelle definiert ist bzw. in der die zentralen Längsachsen der ersten und der zweiten Getriebeausgangswelle gelegen sind.

In einer besonders zu bevorzugenden Gestaltung ist vorgesehen, dass die zentrale Längsachse der ersten Getriebeeingangswelle auf einer anderen Seite der angesprochen zweiten Ebene, in der die zentralen Längsachsen der ersten und zweiten Getriebeausgangswelle gelegen sind, angeordnet ist, als der erste Elektromotor und/oder- sofern vorhanden - die zentrale Schaltwelle des Getriebeaktors und/oder- sofern vorhanden - der zweite Elektromotor und / oder der Getriebeaktor.

Es kann vorgesehen sein, dass die Getriebeeinrichtung so ausgebildet ist, dass das Getriebe bzw. das innere Getriebe genau einen Antriebsstrangabschnitt aufweist, also nicht parallel gestaltete Antriebsstrangabschnitte aufweist.

Es kann aber auch vorgesehen sein, dass die Getriebeeinrichtung als Doppelkupplungsgetriebe bzw. Parallelschaltgetriebe ausgebildet ist, also insbesondere ein erstes Teilgetriebe aufweist sowie ein zweites, parallel zum ersten Teilgetriebe geschaltetes Teilgetriebe.

Bei einer solchen Gestaltung ist besonders bevorzugt vorgesehen, dass sowohl das erste Teilgetriebe als auch das zweite Teilgetriebe nach Art eines bereits beschriebenen 3-Wellen-Getriebes ausgebildet sind. Es kann insbesondere vorgesehen sein, dass die bereits angesprochene erste Getriebeeingangswelle eine Getriebeeingangswelle des ersten Teilgetriebes ist, und dass ferner eine zweite Getriebeeingangswelle vorgesehen ist, die eine Getriebeeingangswelle des zweiten Teilgetriebes ist. Dabei kann beispielsweise vorgesehen sein, dass die erste Getriebeeingangswelle und die zweite Getriebeeingangswelle konzentrisch zueinander angeordnet sind. Dies kann insbesondere so sein, dass eine dieser beiden Getriebeeingangswellen hohl ausgebildet ist oder zumindest teilweise hohl ausgebildet ist und sich die andere dieser beiden Getriebeeingangswellen in diese hohl ausgebildete Welle erstreckt. Beispielsweise kann die erste Getriebeeingangswelle radial innerhalb der zweiten Getriebeeingangswelle gelegen sein, oder umgekehrt, bzw. sich die erste Getriebeeingangswelle durch die zweite Getriebeeingangswelle erstrecken, oder umgekehrt.

Bei einer solchen Gestaltung mit zwei Getriebeeingangswellen bzw. einer solchen Gestaltung, die als Doppelkupplungsgetriebe bzw. als Parallelschaltgetriebe ausgebildet ist, sind insbesondere auch die zwei angesprochenen Getriebeausgangswellen vorgesehen. Dies kann beispielsweise so sein, dass die erste und die zweite Getriebeausgangswelle Ausgangswellen des ersten Teilgetriebes und Ausgangswellen des zweiten Teilgetriebes sind. Es kann also insbesondere vorgesehen sein, dass sich das erste Teilgetriebe und das zweite Teilgetriebe die beiden Ausgangswellen teilen.

Es ist bei einer solchen Gestaltung, die als Doppelkupplungsgetriebe bzw. Parallelschaltgetriebe ausgebildet ist, insbesondere vorgesehen, dass Gänge bildende Radsätze im ersten Teilgetriebe vorgesehen sind und Gänge bildende Radsätze im zweiten Teilgetriebe vorgesehen sind. Dabei ist insbesondere vorgesehen, dass im ersten Teilgetriebe zwischen der ersten Getriebeeingangswelle und der ersten Getriebeausgangswelle ein oder mehrere Radsätze zur Bildung von Gängen angeordnet sind, und zwischen der ersten Getriebeeingangswelle und der zweiten Getriebeausgangswelle ein oder mehrere Radsätze zur Bildung von Gängen angeordnet sind. Diese jeweiligen Radsätze können dabei in der Weise angeordnet und gestaltet sein, wie es bereits oben erläutert wurde. Ferner ist bei einer derartigen Gestaltung, die als Doppelkupplungsgetriebe bzw. Parallelschaltgetriebe ausgebildet ist, insbesondere vorgesehen, dass im zweiten Teilgetriebe zwischen der zweiten Getriebeeingangswelle und der ersten Getriebeausgangswelle ein oder mehrere Radsätze zur Bildung von Gängen angeordnet sind, und zwischen der zweiten Getriebeeingangswelle und der zweiten Getriebeausgangswelle ein oder mehrere Radsätze zur Bildung von Gängen angeordnet sind. Diese jeweiligen Radsätze können dabei in entsprechender Weise angeordnet und gestaltet sein, wie es bereits oben erläutert wurde, also insbesondere so, dass ein auf der zweiten Getriebeeingangswelle angeordnetes bzw. von dieser getragenes Rad eines jeweiligen Radsatzes des zweiten Teilgetriebes mit dieser zweiten Getriebeeingangswelle drehfest verbunden ist, und ein Rad dieses jeweiligen Radsatzes, welches jeweils von einer Getriebeausgangswellen getragen wird bzw. auf dieser angeordnet ist, drehbeweglich gegenüber dieser jeweiligen Welle angeordnet ist bzw. als Losrad gestaltet ist. Entsprechend sind hier insbesondere Gangkupplungen oder funktionsgleiche oder funktionsähnliche Einrichtungen vorgesehen, um zum einlegen von Gängen entsprechende drehfeste Kopplungen zwischen einem jeweiligen Rad und einer jeweiligen Getriebeausgangswelle zu erzeugen.

Unabhängig davon, ob die Kraftfahrzeug-Getriebeeinrichtung als Doppelkupplungsgetriebe bzw. Parallelschaltgetriebe ausgebildet ist, oder nicht, können die Gangkupplungen bzw. die funktionsgleichen oder funktionsähnlichen Einrichtung mit Synchronisationseinrichtungen versehen sein.

In einer besonders bevorzugten Gestaltung ist vorgesehen, dass ein Schaltungsmodul vorgesehen ist, dass auch als Schalt- bzw. Schaltungseinrichtung bezeichnet werden kann und insbesondere eine innere Getriebeschaltung ist bzw. Bestandteil einer inneren Getriebeschaltung ist. Es ist insbesondere vorgesehen, dass dieses Schaltungsmodul zwischen dem Getriebeaktor und den Gangkupplungen angeordnet ist, wobei der Getriebeaktor nicht zum Schaltungsmodul gehört. Dies ist vorzugsweise so, so dass mittels des Getriebeaktors das Schaltungsmodul und dadurch die Gangkupplungen betätigbar sind. Es kann vorgesehen sein, dass die Gangkupplungen bzw. Gangkupplungsteile diesem Schaltungsmodul zugeordnet sind, bzw. Bestandteil des Schaltmoduls sind. Beispielsweise kann vorgesehen sein, dass ein Teil einer Synchronisationseinrichtung bzw. die Synchronisationseinrichtungen - sofern sie vorgesehen sind - bzw. Schiebemuffen, die den Gangkupplungen zugeordnet sein können, dem Schaltungsmodul zugeordnet sind. Wie angesprochen, gehört zumindest der Getriebeaktor allerdings nicht zu diesem Schaltungsmodul. Mittels des Getriebeaktors kann allerdings das Schaltungsmodul betätigt werden, so dass auch die Gangkupplungen betätigt werden können.

In zu bevorzugender Gestaltung weist das Schaltungsmodul eine erste Führungsstange auf sowie eine zweite Führungsstange, die parallel zur ersten Führungsstange angeordnet ist und quer zu ihrer Längsrichtung zur ersten Führungsstange beabstandet ist. Dabei kann insbesondere vorgesehen sein, dass ein Verbindungsteil, wie beispielsweise Blech oder dergleichen, vorgesehen ist, über welches diese beiden Führungsstangen fest miteinander verbunden sind. Dieses Verbindungsteil bzw. Blech kann also fest an beiden dieser Führungsstangen angeordnet sein. Dabei ist insbesondere vorgesehen, dass von der ersten Führungsstange mehrere erste Schaltungsteile beweglich aufgenommen werden und dass von der zweiten Führungsstange mehrere zweite Schaltungsteile beweglich aufgenommen werden. Hierbei ist insbesondere vorgesehen, dass mehrere erste Schaltungsteile axial beweglich auf bzw. von der ersten Führungsstange aufgenommen werden und mehrere zweite Führungsteile axial beweglich auf bzw. von der zweiten Führungsstange aufgenommen werden. In zu bevorzugender Gestaltung ist dabei vorgesehen, dass die ersten Schaltungsteile untereinander jeweils relativ beweglich zueinander angeordnet sind und die zweiten Schaltungsteile untereinander jeweils relativ beweglich zueinander angeordnet sind. Ferner ist bevorzugt vorgesehen, dass ein jedes der ersten Schaltungsteile gegenüber einem jedem der zweiten Schaltungsteile relativ beweglich angeordnet ist. Die ersten Schaltungsteile können im Vergleich zueinander formverschieden sein. Die zweiten Schaltungsteile sind in bevorzugter Gestaltung ebenfalls im Vergleich untereinander formverschieden. Es kann auch vorgesehen sein, dass sich ein, mehrere oder alle ersten Schaltungsteile hinsichtlich ihrer Form von einem, mehreren oder allen zweiten Schaltungsteile unterscheiden.

In besonders bevorzugter Gestaltung weisen die ersten und die zweiten Schaltungsteile jeweils ein Schaltmaul auf. Es kann vorgesehen sein, dass diese Schaltungsteile jeweils genau ein Schaltmaul aufweisen; es kann aber auch vorgesehen sein, dass diese Schaltungsteile jeweils mehrere Schaltmäuler aufweisen. Es ist insbesondere vorgesehen, dass die angesprochenen Schaltungsteile jeweils über ihr Schaltmaul vom Getriebeaktor betätigbar sind. Zu diesem Zweck kann beispielsweise wenigstens ein Hauptbetätigungselement und/oder wenigstens ein Nebenbetätigungselement am Getriebeaktor vorgesehen sein. Es kann beispielsweise vorgesehen sein, dass ein derartiges Hauptbetätigungselement als Schaltfinger ausgebildet ist, der so beweglich angeordnet ist, dass er mit einem derartigen Schaltmaul in Eingriff gebracht werden kann und bei einer anschließenden Betätigung dieses Schaltmaul betätigen kann.

Ein solches Hauptbetätigungselement bzw. ein solcher Schaltfinger des Getriebeaktors ist vorzugsweise derart beweglich - und zwar insbesondere relativ zu den Schaltmäulern -, dass nach dem Einlegen eines Ganges mittels Hauptbetätigungselements bzw. Schaltfingers dieses Hauptbetätigungselement bzw. dieser Schaltfinger in seine Neutrallage zurückbewegt werden kann, ohne dass dabei der zuvor eingelegte Gang wieder ausgelegt wird.

Besonders bevorzugt ist vorgesehen, dass jedes der ersten Schaltungsteile und jedes der zweiten Schaltungsteile jeweils ein Schaltmaul aufweist, wobei diese angesprochenen Schaltmäuler im wesentlichen formidentisch im Vergleich zueinander sind. Dabei ist besonders bevorzugt vorgesehen, dass diese ersten und zweiten Schaltungsteile so angeordnet sind, dass die in ihnen gebildeten Schaltmäuler nebeneinander und parallel zueinander ausgerichtet sind bzw. die Ebenen, in denen die Schaltmäuler liegen bzw. die von den Schaltmäulern aufgespannt werden, parallel zueinander gelegen sind. Es kann dabei insbesondere vorgesehen sein, dass die entsprechenden Abschnitte der ersten und zweiten Schaltungsteile, in denen jeweils ein Schaltmaul vorgesehen ist, in einer Art Reihe nebeneinander angeordnet sind, und zwar insbesondere aufeinander folgend mit jeweils geringem Abstand.

Es ist insbesondere vorgesehen, dass die ersten und die zweiten Schaltungsteile derart beweglich angeordnet sind, dass sie in eine Position verbracht werden können, in denen ein Schaltmaul eines jeden dieser Schaltungsteile mit einem Schaltmaul eines jeden der sämtlichen anderen Schaltungsteile fluchtet. Es sei aber angemerkt, dass auch - insbesondere geringfügige - Formabweichungen der Schaltmäuler gegeben sein können. Die Schaltmäuler können beispielsweise umfangsmäßig geschlossen sein oder zumindest zu einer Seite, oder insbesondere genau einer Seite, der Umfangsrichtung offen sein. Insbesondere sind die Schaltmäuler als Durchbruch, der umfangsmäßig geschlossen ist oder zumindest auf einer Seite offen ist, in dem jeweiligen ersten bzw. zweiten Schaltungsteil ausgebildet.

Die ersten und/oder zweiten Schaltungsteile können beispielsweise als Blechumformteil ausgebildet sein.

In besonders zu bevorzugender Gestaltung ist vorgesehen, dass die Ebenen, die von den Schaltmäulern aufgespannt werden bzw. in denen die Schaltmäuler liegen, jeweils parallel zu den zentralen Längsachsen der ersten und der zweiten Führungsstange gelegen sind. Bevorzugt ist ferner - insbesondere auch bei der vorgenannten Gestaltung - dass die erste und die zweite Führungsstange sich parallel zur ersten bzw. zweiten Getriebeeingangswelle und zur ersten und zur zweiten Getriebeausgangswelle erstrecken.

In einer besonders zu bevorzugenden Weiterbildung der Erfindung ist vorgesehen, dass jedes der angesprochenen Schaltungsteile, also jedes der ersten Schaltungsteile und jedes der zweiten Schaltungsteile, jeweils ein fest an diesen angeordnetes Eingriffsteil aufweist. Ein solches Eingriffsteil kann beispielsweise eine Sichel sein bzw. sichelförmig gestaltet sein oder eine Schaltgabel oder dergleichen. Ein solches Eingriffsteil ist insbesondere dafür bestimmt, in jeweils eine Gangkupplung - bzw. funktionsgleiche oder funktionsähnliche Einrichtung -, insbesondere Schiebmuffe, einzugreifen, und zwar insbesondere um eine Kopplung zu einer solchen Gangkupplung herzustellen, die eine Betätigung ermöglicht.

Es kann vorgesehen sein, dass die erste Führungsstange mit der zweiten Führungsstange mittels eines Brückenteils beabstandet gehalten wird. Es kann insbesondere vorgesehen sein, dass dieses Brückenteil zusätzlich zu dem bereits angesprochenen Verbindungsteil gegeben ist.

In einer besonders bevorzugten Weiterbildung weist ein solches Brückenteil eine Öffnung, die beispielsweise als Bohrung gestaltet ist, auf, in welcher eine drehbar gelagerte Welle des Getriebeaktors gelagert ist. Diese drehbar gelagerte Welle des Getriebeaktors kann insbesondere eine zentrale Schaltwelle sein.

In einer besonders zu bevorzugenden erfindungsgemäßen Gestaltung ist vorgesehen, dass das Schaltungsmodul als vormontierte Baueinheit ausgebildet ist. Es kann auch vorgesehen sein, dass das Schaltungsmodul zusammen mit dem Aktor als vormontierte Baueinheit ausgebildet ist. Beispielsweise kann auch vorgesehen sein, dass das Schaltungsmodul und der Aktor jeweils als vormontierte Baueinheit ausgebildet sind, und diese miteinander verbunden sind, so dass diese Einheit als vormontierte Baueinheit bei der Montage der Getriebeeinheit bzw. beim Einbau in das Kraftfahrzeug aufgebracht werden kann.

Bei einer besonders bevorzugten Ausführungsform der Erfindung ist vorgesehen, dass der Getriebeaktor ein Hauptbetätigungselement und wenigstens ein Nebenbetätigungselement bzw. ein oder mehrere Nebenbetätigungselemente aufweist, wobei das Schaltungsmodul mittels des Hauptbetätigungselements derart betätigbar ist, dass mittels des Schaltungsmoduls des Einlegen eines Zielgangs bewirkt wird. Dabei kann es insbesondere vorgesehen sein, dass es wenigstens ein Hauptbetätigungselement bzw. ein oder mehrere Hauptbetätigungselemente und jeweils ein oder mehrere Nebenbetätigungselemente derart wirkungsverbunden sind, dass nach dem Wählen eines Zielgangs mittels wenigstens eines Nebenbetätigungselements auf das Schaltungsmodul derart eingewirkt werden kann, dass sichergestellt wird, dass sämtliche verbleibende Gänge des Getriebes bzw. - im Falle eines Doppelkupplungsgetriebes bzw. Parallelschaltgetriebes - des gleichen Teilgetriebes, dem der Zielgang zugeordnet ist, ausgelegt sind, bevor dieser Zielgang eingelegt ist. Dabei kann auch vorgesehen sein, dass das wenigstens eine Nebenbetätigungselement eine Sperrfunktion aufweist.. Es kann insbesondere vorgesehen sein, dass das Hauptbetätigungselement - nach dem mittels ihm ein Gang eingelegt wurde - zurück in eine Neutralposition bewegt werden kann, ohne dass dabei der Gang wieder ausgelegt wird.

In zu bevorzugender Gestaltung ist insbesondere vorgesehen, dass das wenigstens eine Hauptbetätigungselement und das bzw. die Nebenbetätigungselemente an einer zentralen Schaltwelle des Getriebeaktors vorgesehen sind. Es sei angemerkt, dass der Getriebaktorsofern er eine zentrale Schaltwelle aufweist - insbesondere genau eine zentrale Schaltwelle aufweist.

Es ist insbesondere also vorgesehen, dass die Kraftfahrzeugsgetriebeeinrichtung mit einem "active interlock" -System versehen ist. Dieses "active interlock"-System kann insbesondere ein oder mehrere Merkmale aufweisen, die eingangs bei der Schilderung des Standes der Technik in Zusammenhang mit "active interlock"-Gestaltungen erwähnt wurden. Insofern wird hinsichtlich der bevorzugten Gestaltung mit einem derartigen "active interlock"-System auf die dortigen Ausführungen bezug genommen, die ausdrücklich zum Gegenstand bevorzugter Gestaltungen der Erfindung gemacht werden und durch Bezugnahme eingebunden werden. Ferner wird auf die DE 102 06 561 A1 im Hinblick auf die Gestaltung des dortigen "active interlocks" ausdrücklich Bezug genommen und die dortigen Ausführungen zum "active interlock" werden ausdrücklich zum Gegenstand der vorliegenden Offenbarung in Bezug auf bevorzugte Gestaltung der Erfindung gemacht.

Die angesprochen Radsätze sind vorzugsweise Zahnradsätze und die Räder dieser Radsätze sind vorzugsweise Zahnräder.

Erfindungsgemäß wird ferner insbesondere ein Schaltungsmodul für eine Kraftfahrzeug-Getriebeeinrichtung gemäß Anspruch 16 vorgeschlagen. Insbesondere ist vorgesehen, dass dieses Schaltungsmodul eine innere Getriebeschaltung bildet bzw. Bestandteil einer inneren Getriebeschaltung ist. Das erfindungsgemäße Schaltungsmodul kann insbesondere Bestandteil einer erfindungsgemäßen Kraftfahrzeug-Getriebeeinrichtung sein.

Das erfindungsgemäße Schaltungsmodul weist eine erste Führungsstange sowie eine zweite Führungsstange auf. Die zweite Führungsstange erstreckt sich im Wesentlichen parallel zur ersten Führungsstange und ist quer zu ihrer Längsachse beabstandet zur ersten Führungsstange angeordnet. Das Schaltungsmodul weist ferner ein Verbindungsteil auf. Dieses Verbindungsteil ist fest mit der ersten Führungsstange und fest mit der zweiten Führungsstange verbunden. Das Verbindungsteil kann beispielsweise als Blech ausgebildet sein. Beispielsweise kann das Verbindungsteil auch als Umformteil gestaltet sein, wie beispielsweise als tiefgezogenes Teil bzw. Blech. Von der ersten Führungsstange werden mehrere erste Schaltungsteile beweglich aufgenommen. Dies ist insbesondere so, dass diese Schaltungsteile axial beweglich aufgenommen werden. Ferner werden mehrere zweite Schaltungsteile von der zweiten Führungsstange beweglich, und insbesondere in axialer Richtung der zweiten Führungssange beweglich, aufgenommen.

Die ersten Schaltungsteile können im Vergleich zueinander formverschieden sein. In entsprechender Weise können die zweiten Führungsteile im Vergleich zueinander formverschieden sein. Es ist insbesondere vorgesehen, dass die Aufnahmestellen bzw. Lagerungen der ersten Schaltungsteile auf der ersten Führungsstange axial versetzt zueinander angeordnet sind. Ferner ist insbesondere vorgesehen, dass diese ersten Führungsteile jeweils relativ beweglich zueinander angeordnet sind. In entsprechender Weise sind die Lagerstellen der zweiten Schaltungsteile auf der zweiten Führungsstange vorzugsweise axial versetzt zueinander angeordnet. Ferner sind auch diese zweiten Schaltungsteile bevorzugt jeweils im Vergleich zueinander relativ beweglich zueinander angeordnet. Ferner ist bevorzugt ein beliebiges erstes Schaltungsteil bezüglich eines beliebigen zweiten Schaltungsteils relativbeweglich angeordnet.

Das Schaltungsmodul kann insbesondere auch so weitergebildet sein, wie es an anderer Stelle dieser Offenbarung bereits beschrieben wurde oder noch beschrieben werden wird.

Erfindungsgemäß wird ferner insbesondere ein Kraftfahrzeugantriebsstrang mit einer Kraftfahrzeug-Getriebeeinrichtung gemäß Anspruch 17 vorgeschlagen. Der Kraftfahrzeugantriebsstrang weist ein Differential auf.

Ferner weist der Kraftfahrzeugantriebsstrang eine Kraftfahrzeug-Getriebeeinrichtung auf. Diese Kraftfahrzeug-Getriebeeinrichtung weist wiederum eine erste Getriebeeingangswelle, eine erste Getriebeausgangswelle, eine zweite Getriebeausgangswelle sowie mehrere Radsätze zur Bildung von Gängen auf. Diese Radsätze können beispielsweise so angeordnet sein, wie es bereits an anderer Stelle dieser Offenbarung in Bezug auf eine Kraftfahrzeug-Getriebeeinrichtung erläutert wurde. Es kann auch vorgesehen sein, dass die Kraftfahrzeug-Getriebeeinrichtung als Parallelschaltgetriebe bzw. als Doppelkupplungsgetriebe ausgebildet ist. Die Kraftfahrzeug-Getriebeeinrichtung weist einen Getriebeaktor auf, der insbesondere ein Getriebeaktor zum Ein- und Auslegen von Gängen der Kraftfahrzeug-Getriebeeinrichtung ist. Dieser Getriebeaktor weist wiederum einen ersten Elektromotor auf. Er kann auch - wie auch an anderer Stelle erläutert - zusätzlich einen zweiten Elektromotor aufweisen. Dabei kann vorgesehen sein, dass einer dieser beiden Elektromotoren ein Wählmotor und der andere ein Schaltmotor ist. Es kann aber auch vorgesehen sein, dass nur ein Elektromotor vorgesehen ist, der sowohl als Wählmotor als auch als Schaltmotor dient. Ferner kann der Getriebeaktor eine zentrale Schaltwelle aufweisen, und zwar insbesondere eine zentrale Schaltwelle mit wenigstens einem Hauptbetätigungselement und wenigstens einem Nebenbetätigungselement.

Die erste Getriebeeingangswelle, die erste Getriebeausgangswelle und die zweite Getriebeausgangswelle sind zueinander jeweils im wesentlichen parallel angeordnet. Ferner sind sie bevorzugt quer zu ihrer Längsrichtung beabstandet. Es kann insbesondere so sein, dass diese drei Wellen so angeordnet sind, senkrecht zu ihrer Längsrichtung betrachteten Querschnitt, die zentralen Achsen dieser drei Wellen so positioniert sind, dass sie die Eckpunkte eines Dreiecks bilden bzw. das durch fiktive Verbindungslinien dieser im Querschnitt betrachteten Längsachsen ein Dreieck gebildet wird.

Die Kraftfahrzeug-Getriebeeinrichtung, die in dem Kraftfahrzeug-Antriebsstrang angeordnet ist, kann insbesondere so gestaltet bzw. weitergebildet sein, wie es bereits an anderer Stelle dieser Offenbarung in Bezug auf eine erfindungsgemäße Kraftfahrzeug-Getriebeeinrichtung bzw. deren Weiterbildungen erläutert wird. Insbesondere kann diese Kraftfahrzeug-Getriebeeinrichtung auch ein erfindungsgemäß gestaltetes bzw. weitergebildetes Schaltungsmodul aufweisen. Die Kraftfahrzeug-Getriebeeinrichtung, die in dem erfindungsgemäßen Kraftfahrzeug-Antriebsstrang angeordnet ist, kann beispielsweise auch als Parallelschaltgetriebe bzw. Doppelkupplungsgetriebe ausgebildet sein.

Es ist insbesondere vorgesehen, dass der erste Elektromotor des Getriebeaktors und/oder - sofern vorhanden - der zweite Elektromotor des Getriebeaktors und/oder - sofern vorhanden - eine zentrale Schaltwelle des Getriebeaktors - und / oder der Getriebeaktor oberhalb der zentralen Längsachse der ersten Getriebeausgangswelle und oberhalb der zentralen Längsachse der zweiten Getriebeausgangswelle und oberhalb der zentralen Längsachse des Differentials angeordnet ist.

Dies gilt insbesondere, wenn der Kraftfahrzeugantriebsstrang in einem Kraftfahrzeug montiert ist bzw. in bestimmungsgemäßer Weise in einen Kraftfahrzeug montiert ist.

In einer besonders bevorzugten Gestaltung ist vorgesehen, dass der erste Elektromotor und/oder - sofern vorhanden - ein zweiter Elektromotor und/oder - sofern vorhanden - eine zentrale Schaltwelle des Getriebeaktors und/oder der Getriebeaktor im Bereich oberhalb der ersten Getriebeausgangswelle und oberhalb der zweiten Getriebeausgangswelle und oberhalb des Differentials angeordnet ist.

Ferner ist vorzugsweise im Kraftfahrzeug-Antriebsstrang bzw. als Bestandteil derinsbesondere erfindungsgemäßen - Kraftfahrzeug-Getriebeeinrichtung wenigstens eine Kupplung bzw. Anfahrkupplung vorgesehen. Im Falle eine Parallelschaltgetriebes bzw. Doppelkupplungsgetriebe ist insbesondere vorgesehen, dass für jedes Teilgetriebe eine Kupplung bzw. Anfahrkupplung vorgesehen ist, bzw. für ein Teilgetriebe eine Anfahrkupplung und für das andere Teilgetriebe eine Lastschaltkupplung. Die erfindungsgemäße Kraftfahrzeug-Getriebeeinrichtung kann also insbesondere durch das Vorhandensein einer Anfahrkupplung bzw. einer Anfahrkupplung und einer Lastschaltkupplung weitergebildet sein. Der Kraftfahrzeug-Antriebsstrang ist vorzugsweise mit einer Brennkraftmaschine gekoppelt, die diesen Antriebsstrang antreiben kann. Die Anfahr- bzw. Lastschaltkupplung ist bevorzugt auf der dieser Brennkraftmaschine zugewandten Seite der Kraftfahrzeug-Getriebeeinrichtung angeordnet.

Erfindungsgemäß wird ferner insbesondere ein Kraftfahrzeug gemäß Anspruch 20 vorgeschlagen. Insbesondere kann vorgesehen sein, dass dabei ein erster und/oder- sofern vorhanden - ein zweiter Elektromotor des Getriebeaktors oberhalb der zuvor bezeichneten Teile bzw. Achsen angeordnet ist oder der gesamte Getriebeaktor oberhalb dieser Bauteile bzw. Achsen angeordnet ist.

In einer besonders zu bevorzugenden Gestaltung ist vorgesehen, dass die erfindungsgemäße Getriebeeinrichtung für eine Front-Quer-Anordnung bestimmt ist. Insbesondere ist bevorzugt, dass die Getriebeeinrichtung in Front-Quer-Bauweise in einem Kraftfahrzeug, und insbesondere einem erfindungsgemäßen Kraftfahrzeug, verbaut ist.

Im Folgenden wird nun anhand der Figuren ein erfindungsgemäßes Ausführungsbeispiel erläutert. Es zeigt:
Fig. 1 einen beispielhaften erfindungsgemäßen Kraftfahrzeug-Antriebsstrang in schematischer teilweiser 3D-Ansicht mit einer beispielhaften erfindungsgemäßen Kraftfahrzeug-Getriebeeinrichtung, die ebenfalls in teilweiser schematischer Ansicht dargestellt ist und ein beispielhaftes erfindungsgemäßes Schaltungsmodul aufweist;
Fig. 2 das beispielhafte erfindungsgemäße Schaltungsmodul aus Fig. 1 in einer ersten 3D-Anschicht;
Fig. 3 das beispielhafte erfindungsgemäße Schaltungsmodul gemäß Fig. 1 in einer zweiten 3D-Anschicht;
Fig. 4 eine 3D-Anschicht des Schaltungsmoduls gemäß Fig. 2 und 3 ohne Schaltungsteile;
Fig. 5 das Schaltungsmodul aus Fig. 1 bis 4 mit dem Getriebeaktor aus Fig. 1 in eingebautem Zustand im inneren des Getriebegehäuses;
Fig. 6 eine 3D-Ansicht des Getriebeaktors aus Fig. 1 und des Schaltungsmoduls aus Fig. 1;
Fig. 7 den Getriebeaktor aus Fig. 1;
Fig. 8 eine der Anmelderin bekannte Struktur eines 3-Wellen-Getriebes für eine Front-Quer-Anwendung; und
Fig. 9 eine Ansicht aus Richtung "X" in Fig. 9.

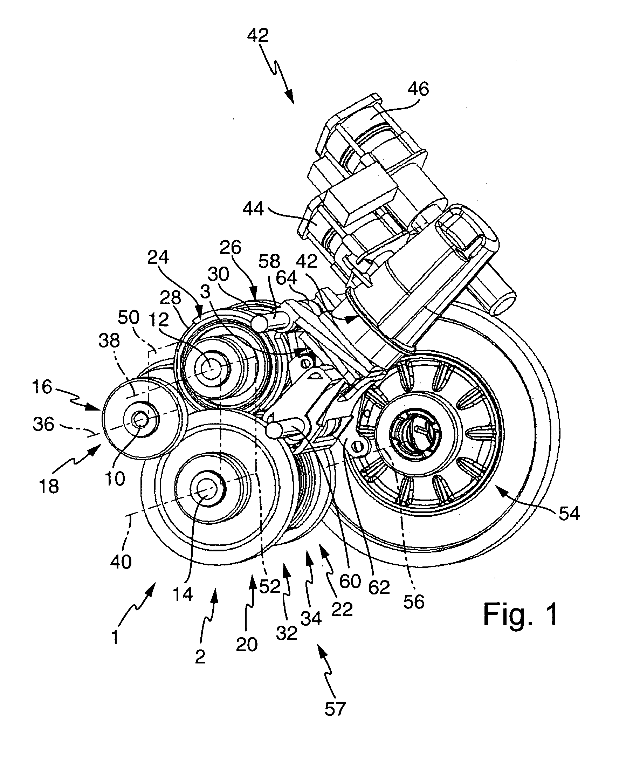

Fig. 1 zeigt - in jeweils teilweiser schematischer Ansicht - einen beispielhaften erfindungsgemäßen Kraftfahrzeug-Antriebsstrang 1 mit einer beispielhaften erfindungsgemäßen Kraftfahrzeug-Getriebeeinrichtung 2, die ein beispielhaftes erfindungsgemäßes Schaltungsmodul 3 aufweist.

Die Getriebeeinrichtung 2 weist eine erste Getriebeeingangswelle 10, eine erste Getriebeausgangswelle 12 sowie eine zweite Getriebeausgangswelle 14 auf. Ferner weist die Getriebeeinrichtung 2 mehrere - in Fig. 1 grob schematisch angedeutete Zahnradsätze 16, 18, 20, 22 für die Bildung von Gängen auf.

Wenigstens einer bzw. mehrere 16, 18 dieser Zahnradsätze 16, 18, 20, 22 sind zwischen der ersten Getriebeeingangswelle 10 und der ersten Getriebeausgangswelle 12 angeordnet. Dies ist insbesondere so, dass jeweils ein Zahnrad der jeweiligen Zahnradsätze 16, 18, die zwischen der ersten Getriebeeingangswelle 10 und der ersten Getriebeausgangswelle 12 angeordnet sind, auf der ersten Getriebeeingangswelle 10 angeordnet ist bzw. von dieser getragen wird, und jeweils ein Zahnrad dieser Zahnradsätze 16, 18, die zwischen der ersten Getriebeeingangswelle 10 und der ersten Getriebeausgangswelle 12 angeordnet sind, auf der ersten Getriebeausgangswelle 12 angeordnet ist bzw. von dieser getragen wird. Dabei ist insbesondere vorgesehen, dass das jeweilige Zahnrad, das auf der ersten Getriebeeingangswelle 10 angeordnet ist bzw. von dieser getragen wird, drehfest mit dieser ersten Getriebeeingangswelle 10 verbunden ist, und das jeweilige Zahnrad, das auf der ersten Getriebeausgangswelle 12 angeordnet ist bzw. von dieser getragen wird, drehbeweglich gegenüber dieser ersten Getriebeausgangswelle 12 angeordnet ist. Zum Einlegen eines jeweiligen Ganges kann jeweils eines der auf der ersten Getriebeausgangswelle 12 angeordneten bzw. von dieser getragenen Zahnräder mit dieser ersten Getriebeausgangswelle 12 drehfest gekoppelt werden. Zu diesem Zweck sind entsprechende Kopplungseinrichtungen bzw. Gangkupplungen 24, 26 vorgesehen, die betätigbar sind, und beispielsweise jeweils eine Schalt- bzw. Schiebemuffe 28, 30 aufweisen, die axialverschieblich angeordnet ist.

Ferner sind wenigstens einer bzw. mehrere 20, 22 der angesprochenen Zahnradsätze 16, 18, 20, 22 zwischen der ersten Getriebeeingangswelle 10 und der zweiten Getriebeausgangswelle 14 angeordnet. Dies ist insbesondere so, dass jeweils ein Zahnrad der jeweiligen Zahnradsätze 20, 22, die zwischen der ersten Getriebeeingangswelle 10 und der zweiten Getriebeausgangswelle 14 angeordnet sind, auf der ersten Getriebeeingangswelle 10 angeordnet ist bzw. von dieser getragen wird, und jeweils ein Zahnrad eines jeder dieser Zahnradsätze 20, 22, die zwischen der ersten Getriebeeingangswelle 10 und der zweiten Getriebeausgangswelle 14 angeordnet sind, auf der zweiten Getriebeausgangswelle 14 angeordnet ist bzw. von dieser getragen wird. Dabei ist insbesondere vorgesehen, dass das jeweilige Zahnrad, das auf der ersten Getriebeeingangswelle 10 angeordnet ist bzw. von dieser getragen wird, drehfest mit dieser ersten Getriebeeingangswelle 10 verbunden ist, und das jeweilige Zahnrad, das auf der zweiten Getriebeausgangswelle 14 angeordnet ist bzw. von dieser getragen wird, drehbeweglich gegenüber dieser zweiten Getriebeausgangswelle 14 angeordnet ist.

Zum Einlegen eines jeweiligen Ganges kann jeweils eines der auf der zweiten Getriebeausgangswelle 14 angeordneten bzw. von dieser getragenen Zahnräder mit dieser zweiten Getriebeausgangswelle 14 drehfest gekoppelt werden. Zu diesem Zweck sind entsprechende Kopplungseinrichtungen bzw. Gangkupplungen 32, 34 vorgesehen, die betätigbar sind, und beispielsweise jeweils eine Schalt- bzw. Schiebemuffe aufweisen, die axialverschieblich angeordnet ist.

Es kann auch vorgesehen sein - was in den Fig. nicht gezeigt ist - , dass die Getriebeeinrichtung 2 als Parallelschaltgetriebe (PSG) bzw. Doppelkupplungsgetriebe (DKG) gestaltet ist und ein erstes Teilgetriebe und ein zu diesem ersten Teilgetriebe parallel geschaltetes zweites Teilgetriebe aufweist. Bei einer solchen Gestaltung ist insbesondere vorgesehen, dass die bereits angesprochene erste Getriebeeingangswelle 10 dem ersten Teilgetriebe zugeordnet ist bzw. Bestandteil des ersten Teilgetriebes ist, und dass eine zweite Getriebeeingangswelle vorgesehen ist, die dem zweiten Teilgetriebe zugeordnet ist bzw. Bestandteil des zweiten Teilgetriebes ist. Dabei sind auch zwischen der zweiten Getriebeeingangswelle und der ersten Getriebeausgangswelle Zahnradsätze angeordnet und zwischen der zweiten Getriebeeingangswelle und der zweiten Getriebeausgangswelle Zahnradsätze angeordnet. gangswelle und der zweiten Getriebeausgangswelle Zahnradsätze angeordnet. Diese sind dort im wesentlichen derart angeordnet, wie es in Bezug auf die erste Getriebeeingangswelle und die beiden Getriebeausgangswellen erläutert wurde. Insbesondere sind bei einer derartigen Gestaltung auch bzw. zusätzlich Kopplungseinrichtungen bzw. Gangkupplungen vorgesehen, mittels welchen die gegenüber den Ausgangswellen des zweiten Teilgetriebes drehbeweglich angeordneten und auf diesen Ausgangswellen angeordneten bzw. von dieser jeweiligen getragenen Zahnräder mit der jeweils betreffenden Ausgangswelle zum Einlegen eines jeweiligen Ganges drehfest koppelbar sind. Bei einer solchen Gestaltung als Parallelschaltgetriebe bzw. Doppelkupplungsgetriebe kann vorgesehen sein, dass die erste Getriebeeingangswelle sich durch die zweite Getriebeeingangswelle erstreckt, oder umgekehrt, wobei die jeweils äußere Welle als Hohlwelle ausgebildet ist. Dabei ist insbesondere vorgesehen, dass die Einheit der auf der ersten Getriebeeingangswelle angeordneten Zahnräder von Zahnradsätzen axial versetzt zur Einheit der auf der zweiten Getriebeeingangswelle angeordneten Zahnräder von Zahnradsätzen angeordnet ist.

Die erste Getriebeeingangswelle 10 ist im wesentlichen parallel zur ersten Getriebeausgangswelle 12 sowie zur zweiten Getriebeausgangswelle 14 angeordnet. Die erste Getriebeeingangswelle 10, die erste Getriebeausgangswelle 12 sowie die zweite Getriebeausgangswelle 14 sind quer zu ihrer Längsrichtung beabstandet zueinander angeordnet. Dies ist hier so, dass die zentralen Längsachsen dieser drei Wellen im Querschnitt zu ihrer Längsrichtung gesehen im wesentlichen die Eckpunkte eines Dreiecks bilden. Die zentrale Längsachse der ersten Getriebeeingangswelle ist schematisch durch die gestrichelte Linie 36 angedeutet, die zentrale Längsachse der ersten Getriebeausgangswelle 12 ist schematisch durch die gestrichelte Linie 38 angedeutet und die zentrale Längsachse der zweiten Getriebeausgangswelle 14 ist schematisch durch die gestrichelte Linie 40 angedeutet.

Die erste Getriebeeingangswelle 10, die erste Getriebeausgangswelle 12, die zweite Getriebeausgangswelle 14 sowie die Radsätze zur Bildung von Gängen und - sofern eine zweite Getriebeeingangswelle vorgesehen ist - die zweite Getriebeeingangswelle können auch als inneres Getriebe bezeichnet werden bzw. sind Bestandteil eines inneren Getriebes.

Die Kraftfahrzeuggetriebeeinrichtung 2 weist ferner einen Getriebeaktor 42 auf. Dieser Getriebeaktor 42 weist einen ersten Elektromotor 44 auf. Im Ausführungsbeispiel gemäß den Fig. 1 bis 7 weist der Getriebeaktor 42 zusätzlich zu dem ersten Elektromotor 44 einen zweiten Elektromotor 46 auf. Der erste Elektromotor 44 ist in diesem Beispiel ein Wählmotor und der zweite Elektromotor 46 ist in diesem Beispiel ein Schaltmotor. Der Getriebeaktor 42 weist ferner eine zentrale Schaltwelle 48 auf.

Der erste Elektromotor 44 und der zweite Elektromotor 46 und/oder die zentrale Schaltwelle 48 und/oder im wesentlichen der gesamte Getriebeaktor 42 ist in Bezug auf wenigstens eine erste Ebene, in der die zentrale Längsachse 36 der ersten Getriebeeingangswelle 10 angeordnet ist, jeweils auf der gleichen Seite dieser ersten Ebene angeordnet, auf der auch die zentrale Längsachse 38 der ersten Getriebeausgangswelle 12 sowie die zentrale Längsachse 40 der zweiten Getriebeausgangswelle 14 angeordnet sind.

In Fig. 1 ist eine beispielhafte erste Ebene dieser Art mit dem Bezugszeichen 50 angedeutet. Es sei allerdings angemerkt, dass weitere erste Ebenen in diesem Ausführungsbeispiel existieren, die die genannte Bedingung erfüllen. Wenn nämlich hier die in Fig. 1 gezeigte erste Ebene 50 in einem gewissen Winkelbereich um die zentrale Längsachse 36 der ersten Getriebeeingangswelle 10 verschwenkt wird, sind die angesprochenen Bauteile bzw. Achsen nach wie vor auf der gleichen Seite der entsprechenden, verschwenkten (ersten) Ebene angeordnet.

Die erste Ebene 50, die beispielhaft grob schematisch in Fig. 1 eingezeichnet ist, ist so gewählt, dass sie im wesentlichen parallel zu einer zweiten Ebene 52, die ebenfalls grob schematisch darstellt ist, gelegen ist, in welcher die zentrale Längsachse 38 der ersten Elektroausgangswelle 12 sowie die zentrale Längsachse 40 der zweiten Getriebeausgangswelle 14 gelegen ist.

Gemäß einer bevorzugten Gestaltung der Erfindung - wie auch in Fig. 1 gezeigt - im Wesentlichen der gesamte Getriebeaktor 42 mit seinem ersten Elektromotor 44 und seinem zweiten Elektromotor 46 und seiner zentralen Schaltwelle 48 auf einer anderen Seite der zweiten Ebene 52 angeordnet als die zentrale Längsachse 36 der ersten Getriebeeingangswelle 10.

Der Kraftfahrzeugsantriebsstrang 1 weist ferner ein Differential bzw. Differentialrad 54 auf, dessen zentrale Längsachse schematisch durch das Bezugszeichen 56 angedeutet ist. Die zentrale Längsachse 56 des Differentials bzw. Differentialrades 54 ist hier parallel zur zentralen Längsachse 36 der ersten Getriebeeingangswelle 10 sowie parallel zur zentralen Längsachse 38 der ersten Getriebeausgangswelle 12 und parallel zur zentralen Längsachse 40 der zweiten Getriebeausgangswelle 14.

Der erste Elektromotor 44 der Kraftfahrzeug-Getriebeeinrichtung 2 - und in diesem Ausführungsbeispiel auch der zweite Elektromotor 46 bzw. die zentrale Schaltwelle 48 des Getriebeaktors 42 bzw. im Wesentlichen der gesamte Getriebeaktor 42 - ist im Bereich oberhalb der zentralen Längsachse 38 der ersten Getriebeausgangswelle 12 und oberhalb der zentralen Längsachse 40 der zweiten Getriebeausgangswelle 14 und oberhalb der zentralen Längsachse 56 des Differentials 54 angeordnet. In der Gestaltung gemäß Fig. 1 ist ferner die Position des Getriebeaktors 42 im wesentlichen im Bereich oberhalb des Differentials bzw. Differentialrades 54 und der ersten 12 bzw. zweiten Haupt- bzw. Getriebeausgangswelle 14. Dieser Bereich bietet die Möglichkeit, dass die Schaltungsbauteile einen leichten Zugang mit kurzen Wegen zu den Hauptwellen bzw. Getriebeausgangswellen 12, 14 haben.

In Fig. 1 ist gut zu erkennen, dass das Schaltungsmodul 3 zwischen dem Getriebeaktor 2 und dem inneren Getriebe 57 mit den Zahnradsätzen 16, 18, 20, 22, der ersten Getriebeeingangswelle 10 sowie der ersten Getriebeausgangswelle 12 und der zweiten Getriebeausgangswelle 14 angeordnet ist.

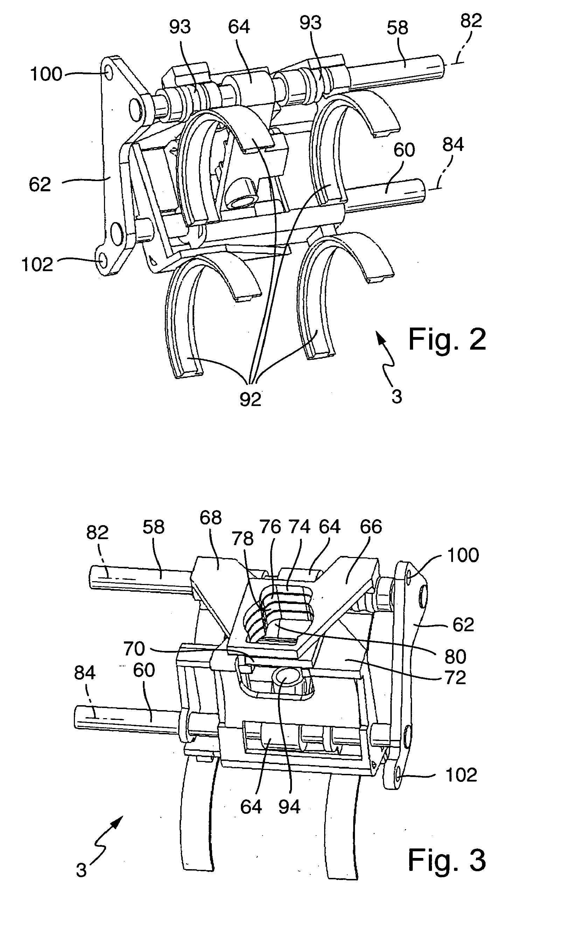

Das Schaltungsmodul 3 ist in den Fig. 2 und 3 in zwei verschiedenen dreidimensionalen Ansichten aus unterschiedlichen Blickwinkeln gezeigt.

Das Schaltungsmodul 3 weist eine erste Stange bzw. Führungsstange 58 sowie eine zweite Stange bzw. Führungsstange 60 auf. Die Führungsstange 58 ist parallel zur Führungsstange 60 angeordnet. Die Führungsstangen 58, 60 sind fest mit dem Verbindungsteil bzw. dem Blech 62 verbunden. Das Brückenteil bzw. die Brücke 64 beabstandet die Führungsstangen 58, 60. In dieser Gestaltung ist das Verbindungsteil 62 wesentlich an einem jeweiligen Ende der Führungsstangen 58, 60 angeordnet und das Brückenteil 64 bzw. die Brücke 64 jeweils zwischen den Enden der Führungsstangen 58, 60.

Auf den Führungsstangen 58, 60 werden Schaltungsteile 66, 68, 70, 72 geführt. Die Schaltungsteile 66, 68, die auf der ersten Führungsstangen 58 geführt werden, werden auch als erste Schaltungsteile bezeichnet, und die Schaltungsteile 70, 72, die auf der zweiten Führungsstangen 60 geführt werden, werden auch als zweite Schaltungsteile bezeichnet. Diese Schaltungsteile 66, 68, 70, 72 sind hier als Blechumformteile ausgebildet, können aber auch auf andere Weise ausgebildet sein. Wie gut Fig. 3 zeigt, sind die Schaltungsteile 60, 68, 70, 72 so gestaltet, dass durch ihre Gestaltung ein Ineinandergreifen der Bauteile bzw. Schaltungsbauteile 66, 68, 70, 72 zu einer kompakten Bauweise führt.

Die Schaltungsteile 66, 68, 70, 72 weisen jeweils eine Schaltmaul bzw. Active-Interlock-Maul (Al-Maul) 74, 76, 78, 80 auf. Wie gut Fig. 3 entnommen werden kann, sind die von Schaltmäulern bzw. Active-Interlock-Mäulern 74, 76, 78, 80 verschiedener Schaltungsteile 66, 68, 70, 72 gebildeten Ebenen im wesentlichen parallel zueinander angeordnet. Diese Ebenen liegen jeweils parallel zu den Führungsstangen 58 und 60 bzw. deren zentralen Längsachsen 82, 84.

Die Schaltungsteile 66, 68, 70, 72 können mittels des Getriebeaktors 42 betätigt bzw. belastet bzw. bewegt werden, und zwar insbesondere relativ zu einander bewegt werden., so dass Gänge im Getriebe ein- bzw. ausgelegt werden können. Zu diesem Zweck weist der Getriebeaktor 42 wenigstens ein Hauptbetätigungselement 86, wie beispielsweise Schaltfinger, sowie wenigstens ein Nebenbetätigungselement 88 auf. Dieses wenigstens eine Hauptbetätigungselement 86 sowie dieses wenigstens eine Nebenbetätigungselement 88 ist an der zentralen Schaltwelle 48 des Getriebeaktors 42 - insbesondere jeweils fest - angeordnet.

Das wenigstens eine Hauptbetätigungselement 86, das wenigstens eine Nebenbetätigungselement 88 sowie die Schaltmäuler 74, 76, 78, 80 wirken derart zusammen, dass nach dem Wählen und bevor durch das entsprechende Einwirken des Hauptbetätigungselements 86 auf ein dem Zielgang zugeordnetes Schaltungsteil bzw. Schaltmaul ein Zielgang eingelegt ist, mittels des wenigstens einen Nebenbetätigungselements 88 auf die verbleibenden Schaltungsteile, die nicht dem Zielgang zugeordnet sind, derart eingewirkt wird, dass sichergestellt ist, dass die über diese verbleibenden Schaltungsteile einlegbaren Gänge ausgelegt und / oder gesperrt sind, bevor der Zielgang eingelegt ist. Es kann vorgesehen sein, dass einem oder mehreren Schaltungsteilen jeweils zwei Gänge zugeordnet sind, wobei der jeweils eine - ausgehend von der Neutrallage - durch entsprechendes Verschieben in der einen Orientierung einlegbar ist und wobei der jeweils andere durch entsprechendes Verschieben in der entgegen gesetzten Orientierung einlegbar ist. Das Einlegen der Gänge bzw. das angesprochene Verschieben in eine Ganglage erfolgt insbesondere durch entsprechende Belastung durch das Hauptbetätigungselement 86. Die Nebenbetätigungselemente wirken also insbesondere jeweils in Schaltgassen, in denen dass Hauptbetätigungselement aktuell nicht wirkt. Das Schalten bzw. das Einlegen von Gängen bzw. das Auslegen von Gängen erfolgt insbesondere Verschwenken der zentralen Schaltwelle 48. Das Wählen erfolgt insbesondere durch axiales Verschieben der zentralen Schaltwelle 48. Die Wählbewegung wird vom Wählmotor 44 erzeugt und die Schaltbewegung wird vom Schaltmotor 46 erzeugt.

Im Ausführungsbeispiel ist beispielhaft vorgesehen, dass auf der Welle des Wählmotors 44 ein Kronrad sitzt, das in eine mit entsprechender Verzahnung versehene Spindelmutter eingreift, die auf einer Spindel sitzt, die an der zentralen Schaltwelle 48 ausgebildet wird. Hierdurch kann die zentralen Schaltwelle 48 in ihrer Längsrichtung bewegt werden. Dort ist weiter beispielhaft vorgesehen, dass auf der Antriebswelle des Schaltmotors ein Zahnrad sitzt, dass in eine an einer Spindelmutter vorgesehene Zahnstange eingreift, wobei diese Spindelmutter auf einer an der zentralen Schaltwelle 48 ausgebildeten Spindel sitzt, so dass die Spindelmutter beim Antrieb durch den Schaltmotor axial bewegt wird, und dadurch ein Verschwenken der zentralen Schaltwelle 48 bewirkt.

Es wird insbesondere die Schaltbewegung an den Schalt- bzw. Active-Interlock-Mäulern 66, 68, 70, 72 vom Haupt-/Nebenbetätigungselement eingeleitet. Das Haupt- und das Nebenbetätigungselement können beispielsweise einstückig ausgebildet sein.

Das Schaltungsmodul 3 weist ferner mehrere Eingriffsteile 92 auf, die hier als Sichel bzw. Gabel ausgebildet sind. Jede dieser Sicheln bzw. Eingriffsteile 92 ist mit einem der Schaltungsteile 66, 68, 70, 72 fest verbunden. Über diese Eingriffsteile 92 bzw. Sicheln 92 wird die Schaltbewegung in bzw. an eine der Hauptwellen bzw. Getriebeausgangswellen 12, 14 bzw. eine jeweilige dort angeordnete Gangkupplung übertragen. An den Schaltungsteilen 66, 68, 70, 72 sind Konturen 93 vorgesehen bzw. aufgebracht, auf denen mit Rastelementen die Neutral- bzw. Gangendlagen rastiert werden können. In einer besonders vorteilhaften Ausgestaltung steckt das entsprechende Federelement bzw. das jeweils zugehörige Federelement im Getriebegehäuse.

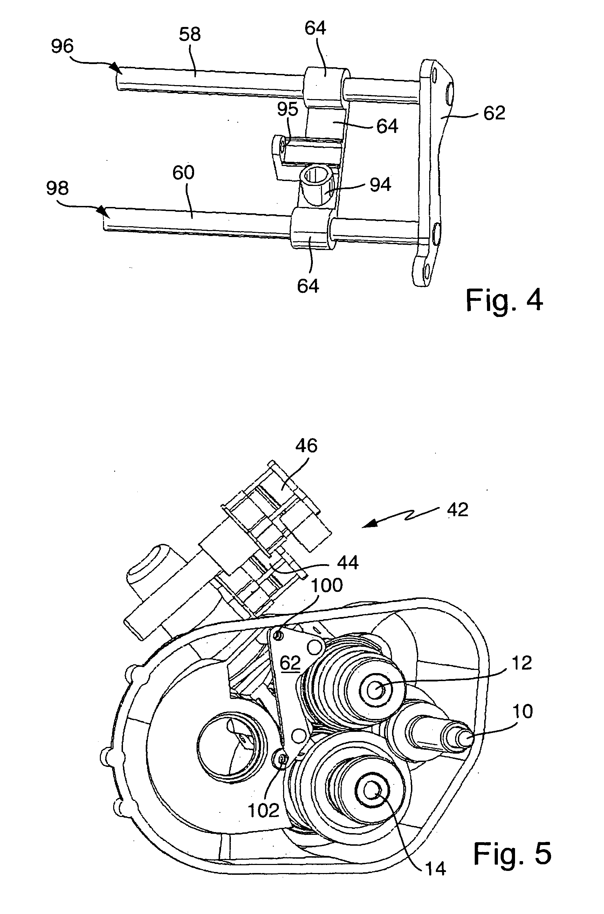

Fig. 4 zeigt das Schaltungsmodul 3 in einer Darstellung ohne die Schaltungsteile 66, 68, 70, 72. In dem Brückenteil bzw. der Brücke 64 ist eine Öffnung bzw. Bohrung 94 vorgesehen. Diese Öffnung bzw. Bohrung 94 an dem Brückenteil bzw. der Brücke 64 bietet eine Lagerstelle für die Drehwelle bzw. zentrale Schaltwelle 48 des Getriebeaktors 2. Die zentrale Schaltwelle 48 ist also in der Brücke bzw. im Brückenteil 94 gelagert. Vorteilhaft an dieser Ausführung ist insbesondere, dass eine entsprechende Lagerstelle in aus dem Stand der Technik bekannten Gestaltungen durch einen Gehäusebutzen geliefert wird und dadurch zusätzliche Toleranzen bedingt sind. Die vorgeschlagene Ausführung beinhaltet weniger Toleranzen in Bezug auf die Ausrichtung des Getriebeaktors 2 zu den Schaltungsteilen 66, 68, 70, 72 bzw. den Schalt- bzw. Active-Interlock-Mäulern 74, 76, 78, 80.

An dem Brückenteil bzw. der Brücke 64 ist eine Lasche 95 vorgesehen, die der axialen Befestigung am Getriebegehäuse dient und gleichzeitig die Reaktionskraft aus der Schaltbewegung zentral abstützt. Diese Lasche 95 weist hier ein Befestigungsauge auf. Die Lasche 95 ist hier zwischen der ersten Führungsstange 58 und der zweiten Führungsstange 60 positioniert.

Zu einer Seite wird das Schaltungsmodul 3 im Getriebegehäuse mit den Stangenenden 96, 98 der Führungsstangen 58, 60 ausgerichtet. Zur anderen Seite wird das Schaltungsmodul 3 über bzw. mittels Bohrungen 100, 102, die im Verbindungsteil bzw. Blech 62 vorgesehen sind, ausgerichtet und axial am Getriebegehäuse befestigt. Hierzu können insbesondere Schrauben oder dergleichen vorgesehen sein. Dies ist auch gut in Fig. 5 zu erkennen, die den eingebauten Zustand des Schaltungsmoduls 3 im Inneren des Getriebegehäuses darstellt.

Die Gestaltung des Schaltungsmoduls gemäß dem Ausführungsbeispiel hat den Vorteil, dass diese Einheit komplett vormontiert werden kann und in dieser vormontierten Form auf den Radsatz bzw. die Radsätze gebracht werden kann. Danach kann die Vormontageeinheit mit dem Radsatz bzw. den Radsätzen und der Schaltung bzw. Schaltmodul 3 in das Getriebegehäuse gefügt werden bzw. montiert werden. Bei der beschriebenen Gestaltung wird durch die Anordnung und Ausgestaltung des Getriebeaktors eine elegante Montagemöglichkeit sowie baulich einfache Anordnung innerhalb des Gesamtarrangements für Doppelkupplungsgetriebe geschaffen. Auch wenn das Ausführungsbeispiel nicht primär für Doppelkupplungsgetriebe beschrieben wurde, wurde bereits oben angedeutet, dass diese Gestaltung sich auch für Doppelkupplungsgetriebe gut einsetzen lässt.

Das Schaltungsmodul ist im Wesentlichen im Bereich zwischen der zur Kurbelwelle parallelen Hauptwelle bzw. (ersten) Getriebeausgangswelle 12, also insbesondere oberen Getriebeausgangswelle, und dem Differential angeordnet. Das Schaltungsmodul 3 ist auf dem Radsatz bzw. den Radsätzen vormontiert und mit dem Radsatz bzw. den Radsätzen gemeinsam im Getriebegehäuse montiert.

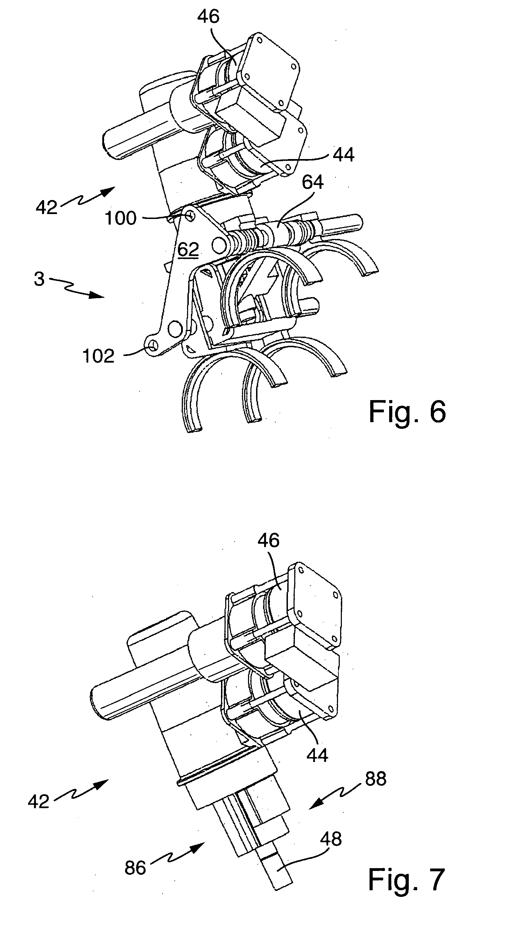

Fig. 6 zeigt das Schaltungsmodul 3 sowie den Getriebeaktor 2. Dieses Schaltungsmodul 3 kann mit dem Getriebeaktor 2 zu einer Baueinheit vormontiert werden. Fig. 7 zeigt insbesondere den Getriebeaktor 2 mit seiner Drehwelle bzw. zentralen Schaltwelle 48 sowie mit dem Hauptbetätigungselement 86 und Nebenbetätigungselement 88.

Wie das Ausführungsbeispiel zeigt, wird durch diese Gestaltung eine Möglichkeit geschaffen, durch die der Bauraum oberhalb des Differentiairades 54 und der Hauptwelle bzw. Getriebeausgangswelle 58 zur Positionierung des Getriebeaktors 42 genutzt wird. Es gibt viele Fahrzeuge, bei denen dieser Bauraum einen frei und ungenutzt ist. Die erfindungsgemäße Positionierung des Getriebeaktors weist darüber hinaus den Vorteil auf, dass der meist alleinige freie Zugang zur Kupplung für die Kupplungsaktoren durch den Getriebeaktor in der Projektion - im Gegensatz zu diversen Gestaltungen, die aus dem Stand der Technik bekannt sind - nicht blockiert wird. Ein weiterer Vorteil der Gestaltung gemäß dem Ausführungsbeispiel besteht darin, dass die Drehwelle bzw. zentrale Schaltwelle am Getriebeaktor nicht so lang ausgeführt werden muss, wie es im Stand der Technik häufig zwangsläufig erforderlich ist. Dies wird im Vergleich zur Gestaltung gemäß den Fig. 8 und 9 deutlich, wo die zentrale Schaltwelle am Getriebeaktor so lang ausgeführt werden muss, dass die oberhalb und unterhalb der Getriebeeingangswelle liegenden Schaltschienen 218, 220 der inneren Schaltung erreicht werden. Ein weiterer Vorteil der Gestaltung gemäß dem Ausführungsbeispiel besteht darin, dass die Bauteile der inneren Schaltung bzw. des Schaltungsmoduls 3 als kompakte Einheit ausgebildet bzw. zusammenfasst werden kann, und zwar ggf. sogar mit dem Getriebeaktor 2. Bei der Gestaltung gemäß den Fig. 8 und 9 können nämlich die Bauteile im inneren Schaltraum nicht als eine kompakte Einheit zusammengefasst werden.

Es wird also ein Active-Interlock-Drehwellenaktor für 3-Wellen-Getriebe geschaffen, der den verfügbaren Bauraum im Getriebe optimal - bzw. zumindest gut - ausnutzt. Wie das Ausführungsbeispiel zeigt, wird auch ein kompaktes Schaltmodul geschaffen, das den möglichen Bauraum an Getrieben - insbesondere solchen für einen Front-Quer-Einbau - ausnutzt, um alle Zusatzaggregate für ein Doppelkupplungsgetriebe ideal platzieren zu können. Die Bauweise des Schaltungsmoduls ist kostengünstig und sorgt für ideale - zumindest aber gute - Stabilität und Genauigkeit während der Funktion. Das Schaltungsmodul ist insbesondere ein Active-Interlock-Schaltungmodul.

Wie das Ausführungsbeispiel zeigt, lässt sich die dort gezeigte Gestaltung insbesondere auch für automatisierte Schaltgetriebe einsetzen.

### Bezugszeichenliste

- 1: Kraftfahrzeug-Antriebsstrang
- 2: Kraftfahrzeug-Getriebeeinrichtung
- 3: Schaltungsmodul
- 10: erste Getriebeeingangswelle
- 12: erste Getriebeausgangswelle
- 14: zweite Getriebeausgangswelle
- 16: Zahnradsatz
- 18: Zahnradsatz
- 20: Zahnradsatz
- 22: Zahnradsatz
- 24: Gangkupplung an 12
- 26: Gangkupplung an 12
- 28: Schalt- bzw. Schiebemuffe von 24
- 30: Schalt- bzw. Schiebemuffe von 26
- 32: Gangkupplung an 14
- 34: Gangkupplung an 14
- 36: zentrale Längsachse von 10
- 38: zentrale Längsachse von 12
- 40: zentrale Längsachse von 14
- 42: Getriebeaktor
- 44: erster Elektromotor
- 46: zweiter Elektromotor
- 48: zentrale Schaltwelle
- 50: erste Ebene
- 52: zweite Ebene
- 54: Differentialrad
- 56: zentrale Längsachse von 54
- 57: inneres Getriebe von 2
- 58: erste (Führungs-)Stange von 3
- 60: zweite (Führungs-)Stange von 3
- 62: Verbindungsteil, Blech
- 64: Brückenteil bzw. Brücke
- 66: Schaltungsteil
- 68: Schaltungsteil
- 70: Schaltungsteil
- 72: Schaltungsteil
- 74: Schaltmaul bzw. Active-Interlock-Maul (Al-Maul)
- 76: Schaltmaul bzw. Active-Interlock-Maul (Al-Maul)
- 78: Schaltmaul bzw. Active-Interlock-Maul (Al-Maul)
- 80: Schaltmaul bzw. Active-Interlock-Maul (Al-Maul)
- 82: zentrale Längsachse von 58
- 84: zentrale Längsachse von 60
- 86: Hauptbetätigungselement
- 88: Nebenbetätigungselement
- 92: Eingriffsteil (Sichel)
- 93: Kontur
- 94: Öffnung bzw. Bohrung
- 95: Lasche
- 96: Stangenende von 58
- 98: Stangenende von 60
- 100: Bohrung in 62
- 102: Bohrung in 62
- 200: Getriebeeinrichtung
- 202: Getriebeeingangswelle von 200
- 204: erste Getriebeausgangswelle, Hauptwelle von 200
- 206: zweite Getriebeausgangswelle, Hauptwelle von 200
- 208: Differentialrad
- 210: (Anfahr)Kupplung
- 212: innere Schaltung von 200
- 214: Getriebeaktor von 200
- 216: Drehwelle bzw. zentrale Schaltwelle von 214
- 218: Schaltschiene von 200
- 220: Schaltschiene von 200

## Patentansprüche

1. Kraftfahrzeug-Getriebeeinrichtung mit einer ersten Getriebeeingangswelle (10), einer ersten Getriebeausgangswelle (12), einer zweiten Getriebeausgangswelle (14), mehreren Radsätzen (16, 18, 20, 22) zur Bildung von Gängen und mit einem Getriebeaktor (42), wobei die erste Getriebeeingangswelle (10) und die erste Getriebeausgangswelle (12) und die zweite Getriebeausgangswelle (14) sich im Wesentlichen parallel zueinander und quer zu ihrer jeweiligen Längsrichtung jeweils beabstandet zueinander erstrecken und wobei dieser Getriebeaktor (42) einen ersten Elektromotor (44) aufweist, **dadurch gekennzeichnet, dass** dieser erste Elektromotor (44) und / oder eine zentrale Schaltwelle (48) des Getriebeaktors (42) auf der Seite wenigstens einer ersten Ebene (50), in der die zentrale Längsachse (36) der ersten Getriebeeingangswelle (10) gelegen ist, angeordnet ist, auf der auch und die zentrale Längsachse (38) der ersten Getriebeausgangswelle (12) und die zentrale Längsachse (40) der zweiten Getriebeausgangswelle (14) angeordnet ist.

2. Kraftfahrzeug-Getriebeeinrichtung nach Anspruch 1, **dadurch gekennzeichnet, dass** die erste Ebene (50) parallel und beabstandet zu einer zweiten Ebene (52) gelegen ist, wobei in dieser zweiten Ebenen die zentrale Längsachse (38) der ersten Getriebeausgangswelle (12) und die zentrale Längsachse (40) der zweiten Getriebeausgangswelle (14) gelegen sind.

3. Kraftfahrzeug-Getriebeeinrichtung nach Anspruch 2, **dadurch gekennzeichnet, dass** der erste Elektromotor (44) und / oder eine zentrale Schaltwelle (48) des Getriebeaktors (42) auf einer anderen Seite der zweiten Ebene (52) angeordnet ist als die zentrale Längsachse (36) der ersten Getriebeeingangswelle (10).

4. Kraftfahrzeug-Getriebeeinrichtung nach einem der vorangehenden Ansprüche, **dadurch gekennzeichnet, dass** die Kraftfahrzeug-Getriebeeinrichtung (2) als Doppelkupplungsgetriebe bzw. Parallelschaltgetriebe ausgebildet ist, wobei ein erstesTeilgetriebes dieses Doppelkupplungsgetriebes bzw. Parallelschaltgetriebes parallel zu einem zweiten Teilgetriebe dieses Doppelkupplungsgetriebes bzw. Parallelschaltgetriebes geschaltet ist.

5. Kraftfahrzeug-Getriebeeinrichtung nach Anspruch 4, **dadurch gekennzeichnet, dass** die erste Getriebeeingangswelle (10) eine Getriebeeingangswelle des ersten Teilgetriebes ist, und dass eine zweite Getriebeeingangswelle vorgesehen ist, die eine Getriebeeingangswelle des zweiten Teilgetriebes ist.

6. Kraftfahrzeug-Getriebeeinrichtung nach Anspruch 5, **dadurch gekennzeichnet, dass** die erste Getriebeeingangswelle (10) und die zweite Getriebeeingangswelle konzentrisch zueinander angeordnet sind, wobei insbesondere vorgesehen ist, dass eine dieser beiden Getriebeeingangswellen hohl ausgebildet ist und sich die andere dieser beiden Getriebeeingangswellen in diese hohl ausgebildete Getriebeeingangswelle erstreckt.

7. Kraftfahrzeug-Getriebeeinrichtung nach einem der vorangehenden Ansprüche, **dadurch gekennzeichnet, dass** die Kraftfahrzeug-Getriebeeinrichtung (2) ein Schaltungsmodul (3) aufweist.

8. Kraftfahrzeug-Getriebeeinrichtung nach einem der vorangehenden Ansprüche, **dadurch gekennzeichnet, dass** das Schaltungsmodul (3) eine erste Führungsstange (58) und eine sich im Wesentlichen parallel zur ersten Führungsstange (58) erstreckende und quer zu Längsrichtung der ersten Führungsstange (58) von dieser beabstandete zweite Führungsstange (60) aufweist, wobei ein, insbesondere als Blech ausgebildetes, Verbindungsteil (62) vorgesehen ist, über welches diese beiden Führungsstangen (58, 60) fest miteinander verbunden sind, und wobei von der ersten Führungsstange (58) mehrere erste Schaltungsteile (66, 68) beweglich, insbesondere in Achsrichtung der ersten Führungsstange (58) beweglich, aufgenommen werden, und wobei mehrere zweite Schaltungsteile (70, 72) von der zweiten Führungsstange (60) beweglich, insbesondere in Achsrichtung der zweiten Führungsstange (60) beweglich, aufgenommen werden.

9. Kraftfahrzeug-Getriebeeinrichtung nach Anspruch 8, **dadurch gekennzeichnet, dass** jedes dieser ersten (66, 68) und zweiten Schaltungsteile (70, 72) jeweils ein Schaltmaul (74, 76, 78, 80) aufweist, wobei diese Schaltungsteile (66, 68, 70, 72) jeweils über ihr Schaltmaul (74, 76, 78, 80) von dem Getriebeaktor (42) betätigbar sind.

10. Kraftfahrzeug-Getriebeeinrichtung nach einem der Ansprüche 8 und 9, **dadurch gekennzeichnet, dass** jedes der Schaltungsteile (66, 68, 70, 72) ein jeweiliges, jeweils fest an diesem jeweiligen Schaltungsteil (66, 68, 70, 72) angeordnetes Eingriffsteil (92), wie Sichel oder Schaltgabel, für den Eingriff in jeweils eine Gangkupplung (24, 26, 32, 34) aufweist.

11. Kraftfahrzeug-Getriebeeinrichtung nach einem der Ansprüche 8 bis 10, **dadurch gekennzeichnet, dass** die erste Führungsstange (58) mit der zweiten Führungsstange (60) mittels eines Brückenteils (64) beabstandet gehalten werden.

12. Kraftfahrzeug-Getriebeeinrichtung nach Anspruch 11, **dadurch gekennzeichnet, dass** das Brückenteil (64) eine Öffnung (94), wie Bohrung, aufweist, in welcher eine drehbar gelagerte Welle (48), insbesondere zentrale Schaltwelle, des Getriebeaktors (42) gelagert ist.

13. Kraftfahrzeug-Getriebeeinrichtung nach einem der Ansprüche 7 bis 12, **dadurch gekennzeichnet, dass** das Schaltungsmodul (3) als eine vormontierte Baueinheit ausgebildet ist.

14. Kraftfahrzeug-Getriebeeinrichtung nach einem der vorangehenden Ansprüche, **dadurch gekennzeichnet, dass** der Getriebeaktor (42) wenigstens ein Hauptbetätigungselement (86) und wenigstens ein Nebenbetätigungselement (88) aufweist, wobei das Schaltungsmodul (3) mittels des Hauptbetätigungselements (86) derart betätigbar ist, dass mittels des Schaltungsmoduls (3) das Einlegen eines Zielgangs bewirkt wird, und wobei das wenigstens ein Hauptbetätigungselement (86) und wenigstens ein jeweiliges Nebenbetätigungselement (88) derart wirkungsverbunden sind, dass nach dem Wählen eines Zielganges mittels dieses wenigstens einen jeweiligen Nebenbetätigungselements (88) auf das Schaltungsmodul (3) eingewirkt werden kann, dass sichergestellt wird, dass die verbleibenden Gänge bzw. die verbleibenden Gänge des Teilgetriebes, dem der Zielgang zugeordnet ist, ausgelegt sind, bevor der dieser Zielgang eingelegt ist.

15. Schaltungsmodul für eine Kraftfahrzeug-Getriebeeinrichtung, und insbesondere für eine Kraftfahrzeug-Getriebeeinrichtung (2) gemäß einem der vorangehenden Ansprüche, **dadurch gekennzeichnet, dass** das Schaltungsmodul (3) eine erste Führungsstange (58) und eine sich im Wesentlichen parallel zur ersten Führungsstange (58) erstreckende und quer zu Längsrichtung (82) der ersten Führungsstange (58) von dieser beabstandete zweite Führungsstange (60) aufweist, wobei ein, insbesondere als Blech ausgebildetes, Verbindungsteil (62) vorgesehen ist, über welches diese beiden Führungsstangen (58, 60) fest miteinander verbunden sind, und wobei von der ersten Führungsstange (58) mehrere erste Schaltungsteile (66, 68) beweglich, insbesondere in Achsrichtung (82) der ersten Führungsstange (58) beweglich, aufgenommen werden, und wobei mehrere zweite Schaltungsteile (70, 72) von der zweiten Führungsstange (60) beweglich, insbesondere in Achsrichtung (84) der zweiten Führungsstange (60) beweglich, aufgenommen werden.

16. Schaltungsmodul nach Anspruch 15, **dadurch gekennzeichnet, dass** das Schaltungsmodul (3) gemäß wenigstens einem kennzeichnenden Teil der Ansprüche 8 bis 14 ausgebildet ist.

17. Kraftfahrzeug-Antriebsstrang mit einer Kraftfahrzeug-Getriebeeinrichtung (2), die eine erste Getriebeeingangswelle (10), eine erste Getriebeausgangswelle (12), eine zweite Getriebeausgangswelle (14), mehrere Radsätze (16, 18, 20, 22) zur Bildung von Gängen und einen Getriebeaktor (42) aufweist, wobei die erste Getriebeeingangswelle (10) und die erste Getriebeausgangswelle (12) und die zweite Getriebeausgangswelle (14) sich im Wesentlichen parallel und jeweils quer zu ihrer Längsrichtung beabstandet zueinander erstrecken, und wobei dieser Getriebeaktor (42) einen ersten Elektromotor (44) aufweist; und wobei der Kraftfahrzeug-Antriebsstrang (1) ein Differential bzw. Differentialrad (54) aufweist, **dadurch gekennzeichnet, dass** der erste Elektromotor (44) und / oder eine zentrale Schaltwelle (48) des Getriebeaktors (42) oberhalb der zentralen Längsachse (38) der ersten Getriebeausgangswelle (12) und oberhalb der zentralen Längsachse (40) der zweiten Getriebeausgangswelle (14) und oberhalb der zentralen Längsachse (56) des Differentials bzw. des Differentialrades (54) angeordnet ist.

18. Kraftfahrzeug-Antriebsstrang nach Anspruch 17, **dadurch gekennzeichnet, dass** die Kraftfahrzeug-Getriebeeinrichtung (2) gemäß wenigstens einem kennzeichnenden Teil der Ansprüche 1 bis 15 ausgebildet ist.

19. Kraftfahrzeug-Antriebsstrang, insbesondere nach einem der Ansprüche 17 und 18, mit einer Kraftfahrzeug-Getriebeeinrichtung (2) gemäß einem der Ansprüche 1 bis 15.

20. Kraftfahrzeug mit einem Kraftfahrzeug-Antriebsstrang (1), der gemäß einem der Ansprüche 17 bis 19 ausgebildet ist.

21. Kraftfahrzeug nach Anspruch 20, **dadurch gekennzeichnet, dass** die Getriebeeinrichtung (2) in Font-Quer-Bauweise in dem Kraftfahrzeug verbaut ist.
